# EUROPEAN PATENT APPLICATION

(11) **EP 4 054 248 A1**
(43) Date of publication of application: **07.09.2022**
(21) Application number: 19951022.3
(22) Date of filing: 30.10.2019
(51) Int. Cl.: H04W 48/20, H04W 36/16, H04W 36/14

(54) **CELL SELECTION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN); LIU, Jianhua, Dongguan, Guangdong 523860 (CN)
(74) Representative: Ipside
(86) International application number: PCT/CN2019/114402
(87) International publication number: WO 2021/081819

(57) **Abstract**

Embodiments of the present application provide a cell selection method and apparatus, a device, and a storage medium. A first communication node acquires reference clock information of a cell in a process of cell selection or reselection, and then determines whether the cell camps on a selected target cell according to the reference clock information of the cell, thereby avoiding that cell reselection needs to be performed due to being camped on a cell which does not match the capability of the node, and resulting in a delay problem. The first communication node may select a cell to be camped on that matches the capability of the node according to the reference clock information of the cell.

## Description

### TECHNICAL FIELD

Embodiments of the present application relate to communication technologies, and in particular, to a cell selection method and apparatus, a device, and a storage medium.

### BACKGROUND

In the industrial Internet of things (English: Industrial interest of Things, abbreviation: IIoT) of the 5th generation mobile communication technology (English: 5th generation mobile networks, abbreviation: 5G), it is proposed to support the needs of transmission of factory automation (Factory automation), transport automation (Transport Industry), smart power (Electrical Power Distribution) and other services in the 5G system. Based on the transmission requirements of delay and reliability, IIoT introduces the concept of time sensitive network (English: Time sensitive network, abbreviation: TSN) or time sensitive communication (Time sensitive Communication, TSC). In order to provide highly reliable and low-latency transmission effects for its services, in the TSN network, the 5C network will serve as a TSN bridge to provide services for the TSN network and services. In response to this, the new radio (New Radio, NR) system needs to provide lower delay guarantees and higher clock synchronization accuracy, so that when industrial automation services are transmitted in the 5G network, the operation and the connection of every point in mechanical operation is accurate, and it meets the time requirements. Based on the requirements of TSN service transmission, when the TSN service is transmitted in 5G, it needs to meet the time synchronization accuracy requirement of 1us.

In the current cell selection and reselection process, redirection information can be carried in radio resource control (Radio Resource Control, RRC) release (release), which includes a redirected radio access technology (Radio Access Technology, RAT) and frequency point information. When a user equipment (UE, user equipment) leaves a connected state, the UE performs a cell selection process if no suitable cell (suitable cell) is found according to the redirection information. If the cell selection information is saved in UE, the UE searches for a suitable cell on the saved frequency point. If a cell is found, the UE selects this cell to camp on. If there is no suitable cell, the UE performs initial cell selection (initial cell selection), that is, the UE scans all supported NR bands, and the UE only searches for the strongest cell on that frequency point for each frequency point. If a cell is found, the UE selects the cell to camp on, otherwise, the UE enters an any cell selection (Any cell selection) state. In the any cell selection state, the UE performs a cell selection process to find a suitable cell. If the UE does not find a suitable cell after searching on all the frequency points of all the supported RATs, the UE tries to find an acceptable cell (acceptable cell) on any RAT to camp on. If the UE finds an acceptable cell, the UE enters a camped on any cell (camped on any cell) state, otherwise the UE stays in the Any Cell Selection state. After entering the Camped on Any Cell state, the UE reads system information of the camped cell, performs cell reselection related measurements, and performs a cell reselection evaluation process (cell reselection evaluation process). When the cell reselection evaluation condition is satisfied, the UE performs cell reselection again. The UE will regularly try to search for a suitable cell on all frequency points of all supported RATs. Specifically, during the existing cell reselection process, when a frequency point with different priority than the current NR frequency point is selected, the UE selects a strongest cell on the frequency point, and when it reselects a frequency point with the same priority as the current NR frequency point, the UE selects a most suitable cell among the N strongest cells on the frequency point (such as a cell with the largest number of beams greater than a threshold).

However, according to the existing cell selection and reselection rules, when a UE with transmission of delay sensitive services chooses to camp on a cell, once the UE needs to transmit delay sensitive related information, the UE needs to reselect to another cell that supported delay sensitive network accuracy immediately, which will bring delay (reselection or handover), and cause a synchronization delay between the UE and the network, and further cause a transmission delay of delay sensitive services.

### SUMMARY

Embodiments of the present application provide a cell selection method and apparatus, a device, and a storage medium, which are used to solve the problem of the synchronization delay between the UE and the network causing the transmission delay of delay sensitive services in the above solution.

In a first aspect, embodiments of the present application may provide a cell selection method, which is applied to a first communication node, and the method includes:
acquiring reference clock information of a cell in a process of cell selection or reselection;
determining whether to camp on a selected target cell according to the reference clock information of the cell.

In a second aspect, embodiments of the present application may provide a cell selection method, which is applied to a second communication node, and the method includes:
sending reference clock information of a cell to a first communication node, where the reference clock information of the cell is used for the first communication node to perform cell selection or reselection.

In a third aspect, embodiments of the present application may provide a cell selection apparatus, including:
an acquisition module, configured to acquire reference clock information of a cell in the process of cell selection or reselection;
a processing module, configured to determine whether to camp on a selected target cell according to the reference clock information of the cell.

In a fourth aspect, embodiments of the present application may provide a cell selection apparatus, including:
a sending module, configured to send reference clock information of a cell to a first communication node, where the reference clock information of the cell is used for the first communication node to perform cell selection or reselection.

In a fifth aspect, embodiments of the present application may provide a communication device, including:
a processor, a memory, and an interface for communicating with a network device;
the memory stores a computer executable instruction;
the processor executes the computer executable instruction stored in the memory, and enabling the processor to perform the cell selection method according to any one of the first aspect.

In a sixth aspect, embodiment of the present application may provide a communication device, including:
a processor, a memory, and an interface for communicating with a network device;
the memory stores a computer executable instruction;
the processor executes the computer executable instruction stored in the memory, and enabling the processor to perform the cell selection method according to any one of the second aspect.

In a seventh aspect, embodiments of the present application may provide a computer readable storage medium, where the computer readable storage medium stores a computer executable instruction, and when the computer executable instruction is executed by a processor, the cell selection method according to any one of the first aspect is implemented.

In an eighth aspect, embodiments of the present application may provide a computer readable storage medium, where the computer readable storage medium stores a computer executable instruction, and when the computer executable instruction is executed by a processor, the cell selection method according to any one of the second aspect is implemented.

In the cell selection method, apparatus, device, and storage medium provided by the embodiments of the present application, the first communication node acquires the reference clock information of the cell in the process of cell selection or reselection, and then determines whether the cell is camped on the selected target cell according to the reference clock information of the cell, thereby avoiding that cell reselection needs to be performed due to being camped on a cell which does not match the capability of the node, and resulting in a delay problem. The first communication node may select a cell to be camped on that matches the capability of the node according to the reference clock information of the cell

### BRIEF DESCRIPTION OF DRAWINGS

In order to more clearly illustrate the technical solutions of the present application or the prior art, the following will briefly introduce the accompanying drawings that need to be used in the description of the embodiments or the prior art. Obviously, the accompanying drawings in the following description are some embodiments of the present application, and for those of ordinary skill in the art, other drawings can also be obtained from these drawings without any creative effort.
FIG. 1 is a schematic flowchart of a first embodiment of a cell selection method provided by the present application;
FIG. 2 is a schematic flowchart of a second embodiment of a cell selection method provided by the present application;
FIG. 3 is a schematic flowchart of an example of a cell selection method provided by the present application;
FIG. 4 is a schematic flowchart of another example of a cell selection method provided by the present application;
FIG. 5 is a schematic flowchart of yet another example of a cell selection method provided by the present application;
FIG. 6 is a schematic structural diagram of a first embodiment of a cell selection apparatus provided by the present application;
FIG. 7 is a schematic structural diagram of a second embodiment of a cell selection apparatus provided by the present application;
FIG. 8 is a schematic structural diagram of a first embodiment of a communication device provided by the present application; and
FIG. 9 is a schematic structural diagram of a second embodiment of a communication device provided by the present application.

### DESCRIPTION OF EMBODIMENTS

In order to make the purposes, technical solutions and advantages of the embodiments of the present application clearer, the technical solutions in the embodiments of the present application will be described clearly and completely below with reference to the drawings in the embodiments of the present application. Obviously, the described embodiments are part of the embodiments of the present application, but not all of the embodiments. Based on the embodiments in the present application, all other embodiments obtained by those of ordinary skill in the art without creative efforts shall fall within the protection scope of the present application.

The terms "first", "second" and the like in the description, claims and the above mentioned drawings of the embodiments of the present application are used to distinguish similar objects, rather than to describe a specific sequence or order. It is to be understood that the data used in this way may be interchanged under appropriate circumstances such that the embodiments of the application described herein can, for example, be implemented in sequences other than those illustrated or described herein. Furthermore, the terms "comprising" and "having" and any variations thereof, are intended to cover non-exclusive inclusion, for example, a process, method, system, product or device comprising a series of steps or units is not necessarily limited to those expressly listed steps or units, rather, other steps or units not expressly listed or inherent to these processes, methods, products or devices can be included.

In this application, it should be understood that the clock information, clock, reference clock, etc., that appear hereinafter have similar meanings and can be replaced with each other; similarly, system information, system messages, etc., also represent the same meaning and can be replaced with each other.

In the existing cell selection process, for each frequency point, user equipment (user equipment, UE) only searches for the strongest cell to find a suitable cell. In the existing cell reselection process, when a frequency point with different priority from the current new radio (New radio, NR) frequency point is reselected, the UE selects the strongest cell on the frequency, and a frequency point with the same priority as the current NR frequency point is reselected, the UE selects a most suitable cell among the N strongest cell on this frequency point (for example, a cell with the largest number of beams greater than a threshold). In specific implementation, if a cell that the UE camps on is an acceptable cell, the UE can only be supported with limited services (such as emergency calls, receiving earthquake and tsunami warning system (Earthquake and Tsunami Warning System, ETWS), etc.) in this cell. If a cell that the UE camps on is a suitable cell, the UE may perform normal data transmission.

However, according to the existing cell selection and reselection rules, when the UE selects a cell to camp on, it does not check whether the cell is a cell that supports time sensitive network (English: Time sensitive network, abbreviation: TSN) accuracy. When a UE that transmits time sensitive communication (Time sensitive communication, TSC) selects the cell to camp on, once the UE needs to transmit TSC-related information, the UE needs to reselect to another cell that supports TSN accuracy immediately, which will bring delay (reselection or handover), resulting in a synchronization delay between the UE and the TSN network, which in turn results in a transmission delay of the TSC service. This is very unfavorable to the transmission requirements of such services with high latency requirements, and may cause the problem that the quality of service (Quality of Service, QoS) of TSN service transmission cannot be guaranteed.

In view of the above problems, the present application provides a cell selection method, so that when the UE performs cell selection or reselection, it can first acquire reference clock information of a cell, and then determine whether a selected target cell is a suitable cell, that is, determine whether to camp on the target cell, or determine whether to continue the cell selection or reselection process.

The technical solution of the present application mainly involves two communication nodes, that is, a first communication node and a second communication node introduced below. The first communication node may be a UE or other terminal devices, and the second communication node may be a terminal or a network device, which is not limited in this solution. On the whole, the solution may involve two executive bodies, a network device and a UE, and the network device may be a device that communicates with the UE (or referred to as a terminal device, a communication terminal, or a terminal). A network device can provide communication coverage for a specific geographic area, and can communicate with terminal devices located within the coverage area. Optionally, the network device may be a base station (Base Transceiver Station, BTS) in a GSM system or a CDMA system, a base station (NodeB, NB) in a WCDMA system, or an evolved base station (Evolutional Node B, eNB or eNodeB) in a LTE system, or a wireless controller in a cloud radio access network (Cloud Radio Access Network, CRAN), or the network device can be a mobile switching center, relay station, access point, vehicle-mounted device, wearable device, hub, switch, bridge, router, network-side device in 5G network, or network device in the future evolved public land mobile network (Public Land Mobile Network, PLMN), and so on. As used herein, "UE" includes, but is not limited to, connections via wired lines, such as via public switched telephone networks (Public Switched Telephone Networks, PSTN), digital subscriber line (Digital Subscriber Line, DSL), digital cable, direct cable connections; and/or another data connection/network; and/or via a wireless interface, such as cellular networks, wireless local area networks (Wireless Local Area Networks, WLAN), digital television networks such as DVB-H networks, satellite networks, AM-FM A broadcast transmitter; and/or an apparatus of another terminal device configured to receive/transmit a communication signal; and/or an Internet of Things (Internet of Things, IoT) device. A terminal device configured to communicate via a wireless interface may be referred to as a "wireless communication terminal", "wireless terminal" or "mobile terminal". Examples of mobile terminals include, but are not limited to, satellite or cellular telephones; personal communications system (Personal Communications System, PCS) terminals that may combine cellular radio telephones with data processing, facsimile, and data communications capabilities; may include radio telephones, pagers, Internet/Intranet access, web browser, memo pad, calendar, and/or PDA of Global Positioning System (Global Positioning System, GPS) receiver; and conventional laptop and/or palmtop receivers or other electronic device including radiotelephone transceivers. It may refer to an access terminal, subscriber unit, subscriber station, mobile station, mobile platform, remote station, remote terminal, mobile device, user terminal, terminal, wireless communication device, user agent, or user equipment. The access terminal may be a cellular phone, a cordless phone, a Session Initiation Protocol (Session Initiation Protocol, SIP) phone, a wireless local loop (Wireless Local Loop, WLL) station, a personal digital assistant (Personal Digital Assistant, PDA), a handheld device with wireless communication functional, computing devices or other processing devices connected to wireless modems, vehicle-mounted devices, wearable devices, terminal devices in 5G networks or in future evolved PLMNs, and so on.

The cell selection method provided by the present application will be described in detail below through specific embodiments.

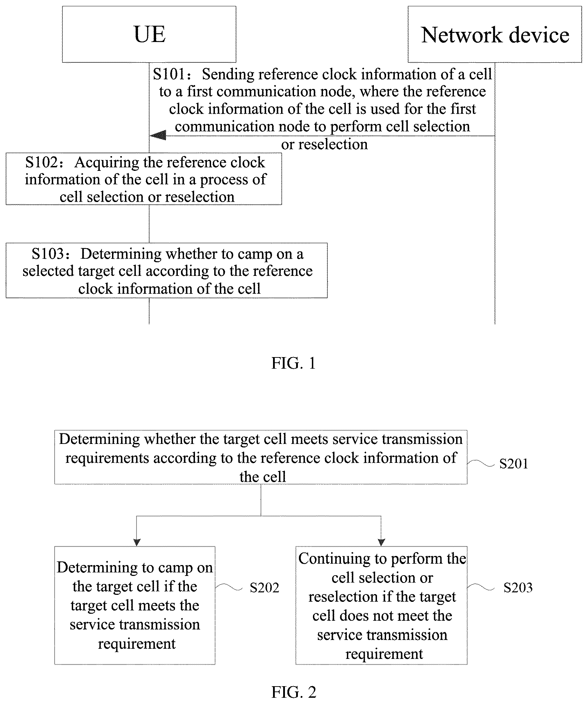

FIG. 1 is a schematic flowchart of a first embodiment of a cell selection method provided by the present application. As shown in FIG. 1, the specific implementation of the solution mainly involves two executive bodies of a first communication node and a second communication node, and the cell selection method specifically includes the following steps:
S101: sending reference clock information of a cell to a first communication node, where the reference clock information of the cell is used for the first communication node to perform cell selection or reselection.

In this step, for this solution, the reference clock information of the cell may be sent to the first communication node through a second communication node device, where the second communication node may be a terminal device or a network device, as a terminal device, the specific information may be obtained from a network device and then forwarded to the first communication node, which is not limited in this solution.

In the following embodiments, the solution is described by taking the second communication node as a network device and the first communication node as a UE as an example.

In order to allow the UE to select a more suitable cell for camping during the cell selection and reselection process, the network device can send the reference clock information of the cell, and the UE receiving this information can acquire the clock information or priority of the cell. The cell here includes a cell to be selected by the UE, or a neighboring cell of the cell currently camped on, etc., which is not limited in this solution.

There are various ways for the network device to send the reference clock information of the cell, including at least the following:
the first is to broadcast system information. The system information includes the above-mentioned reference clock information of a cell. In the specific implementation of this solution, the reference clock information of the cell can be carried in a system information block (System Information Block, SIB) 1, or carried in a SIB9 or carried in a master information block (Master Information Block, MIB), which is not limited in this solution.

The second is to send a RRC connection release message (RRC release), where the RRC connection release message includes the above-mentioned reference clock information of the cell.

In the specific implementation of the solution, the reference clock information of the cell can be used to indicate specific reference clock information, for example, a clock corresponding to a TSN or TSC, or clock information of a high-precision clock (for example: precision of 10ns). Alternatively, the reference clock information of the cell may also be used to indicate cell priority or frequency point priority for redirection and/or reselection. Or, it indicates a clock supported by the cell or frequency point, etc. Alternatively, it may also indicate information of at least one of TSN or TSC clock index, TSN or TSC domain, referenceSFN, time, and so on. The purpose of the reference clock information of the cell is mainly for the UE to determine that the selected cell can meet its own service requirements, and the specific content and how to indicate is not limited in this solution.

In the specific implementation of this solution, it should also be understood that the timing of sending the reference clock information of the cell to the first communication node by the second communication node, which is a network device or a transmitting end, is not limited. It can be sent when required by the first communication node, that is to say, it can be sent during cell selection or reselection, or it can be sent to the first communication node in advance and stored locally in the first communication node.

S102: acquiring the reference clock information of the cell in a process of cell selection or reselection.

In this step, for the first communication node, that is, the UE, the reference clock information of the cell may be acquired from locally stored information, or the reference clock information of the cell may be directly acquired by receiving the system information or the RRC connection release message, which is not limited here. That is, there are at least two ways to acquire the reference clock information of the cell: acquiring the reference clock information of the cell from the local storage space, or acquiring the reference clock information of the cell from the received information sent by the second communication node.

In the process of cell selection or reselection, cell selection needs to be conducted according to the above-mentioned reference clock information of the cell, that is, determining the target cell, or after the target cell is determined according to the current cell priority or frequency point priority, whether to camp on the target cell can be determined according to the reference clock information of the cell.

Specifically, the UE acquires the reference clock information of the cell from the system information. It can be implemented in the following ways:
a first way is to read the reference clock information of the cell from SIB1 in the system information;
a second way is to read the reference clock information of the cell from SIB9 in the system information;
a third way is to read the reference clock information of the cell from the MIB in the system information.

Specifically, for example, a UE that supports a TSC service, or a UE that supports TSN transmission, or a UE that has TSN transmission capability, or a UE that is performing or is about to perform TSC transmission, needs to read the information of SIB1, or SIB9, or MIB of the selected target cell during cell selection or reselection, and acquire the reference clock information of the cell indicating specific reference clock information to determine whether the selected target cell is suitable and whether to camp on the target cell.

In another implementation, the UE may acquire the reference clock information of the cell from the RRC connection release message.

In a specific implementation of this solution, the reference clock information of the cell may carry at least one of the following information to realize the indication of specific reference clock information, including at least one of the following:
information about a clock supported by a current cell or frequency point, for example, it can indicate information such as the supported clock accuracy and the granularity of the accuracy;
information indicating whether a current cell or frequency point supports a clock corresponding to a time sensitive network TSN; for example, in a specific implementation, one or more bits may indicate the supported clock information, or directly indicate that the TSN service is supported;
information indicating whether a current cell or frequency point supports a clock corresponding to a time sensitive transmission TSC; for example, in a specific implementation, one or more bits may indicate the supported clock information, or directly indicate that the TSC is supported;
reference clock information of a neighboring cell or a neighboring frequency point;
information indicating a reference system frame number SFN of a neighboring cell or a neighboring frequency point;
information indicating whether a neighboring cell or a neighboring frequency point supports a clock corresponding to TSC;
time information of a neighboring cell or a neighboring frequency point;
a SFN difference between a neighboring cell and a current cell, or a SFN difference between a neighboring frequency point and a current frequency point;
a time information difference between a neighboring cell and a current cell, or a time information difference between a neighboring frequency point and a current frequency point;
an accuracy difference between a neighboring cell and a current cell, or an accuracy difference between a neighboring frequency point and a current frequency point.

Optionally, the second communication node may also directly indicate cell priority and/or frequency point priority to the first communication node.

Optionally, based on the above solution, the reference clock information of the cell may also specifically indicate TSC domain or index information indicating the supported TSC clock; indicate corresponding referenceSFN and/or time; indicate difference of referenceSFN and/or time between corresponding cell or frequency point and current cell or frequency point.

S103: determining whether to camp on a selected target cell according to the reference clock information of the cell.

In this step, for the first communication node, that is, the UE, after acquiring the reference clock information of the cell, when performing cell selection or reselection, it can determine whether the selected target cell can meet the service requirements of the UE according to the content indicated by the reference clock information of the cell. Determining whether the selected target cell can meet the service requirements of the UE is mainly to determine whether the clock can support the transmission of various services of the UE. If it can meet the service requirements of the UE, the selected cell (i.e., the target cell) can be determined as a suitable cell, and a subsequent camping is performed; otherwise, the cell selection or reselection can be continued.

Optionally, in the specific implementation of the solution, the target cell, that is, the above-mentioned selected cell may also be determined according to the reference clock information of the cell.

It should be noted that, if the UE determines that no cell or frequency point meets the requirements, that is, can be a suitable cell, when performing cell selection or reselection according to the reference clock information of the cell, the UE can continue to perform operation of cell selection or reselection according to the clock information, or cell selection or reselection is performed regardless of clock information.

In the cell selection method provided in this embodiment, the first communication node acquires the reference clock information of the cell in the process of cell selection or reselection, and then determines whether the cell camps on the selected target cell according to the reference clock information of the cell, so as to avoid delay problem caused by cell selection when camping on a cell that cannot match its own capability. The first communication node may select a cell that matches its own capability to camp on according to the reference clock information of the cell.

FIG. 2 is a schematic flowchart of a second embodiment of the cell selection method provided by the present application. As shown in FIG. 2, on the basis of the foregoing embodiment, a specific implementation of step S103 may include the following steps:
S201: determining whether the target cell meets the service transmission requirement according to the reference clock information of the cell.

In the specific implementation of this step, determination can be made according to a service that can be actually supported by the first communication node, that is, the UE. When a delay sensitive service needs to be transmitted, a clock with a fast transmission speed is required. If no delay sensitive service needs to be transmitted, the requirements for the clock will also be different. The following takes the first communication node (e.g., UE) supporting a delay sensitive service as an example to illustrate the solution.

In a first implementation, the first communication node supports TSN transmission or has a TSN transmission capability. This solution can be specifically implemented as:
when the first communication node determines that the reference clock information of the cell indicates that the target cell supports a clock corresponding to a TSN, or the reference clock information of the cell indicates that the target cell matches the TSN transmission requirement supported by the first communication node, or the reference clock information of the cell indicates that the target cell satisfies the TSN transmission, then it is determined that the target cell satisfies the service transmission requirement.

The meaning of the above solution is that the first communication node determines that reference clock information of the cell indicates that the selected target cell supports a clock corresponding to a TSN, or the target cell matches the TSN transmission supported by the first communication node, or the target cell satisfies TSN transmission, to sum up, the target cell can complete the TSN transmission required by the first communication node, and it is no longer necessary to re-select a cell during TSN transmission, then it is determined that the target cell is a suitable cell and can be camped on.

In a second implementation, the first communication node supports the TSC service or needs to perform TSC transmission. The solution can be specifically implemented as:
when the first communication node determines that the reference clock information of the cell indicates that the target cell supports a clock corresponding to TSC, or the reference clock information of the cell indicates the target cell matches TSC transmission requirement supported by the first communication node, or the reference clock information of the cell indicates that the target cell satisfies the TSC service, or the reference clock information of the cell indicates that a clock of the target cell is the same as a clock supported by the first communication node, or a clock of the target cell indicated by the reference clock information of the cell is higher than a clock supported by the first communication node, it is determined that the target cell meets the service transmission requirement.

The meaning of the above solution is that the first communication node determines that the reference clock information of the cell indicates that the selected target cell supports the clock corresponding to the TSC, or the target cell matches the TSC transmission supported by the first communication node, or the target cell satisfies the TSC transmission, or the clock of the target cell is greater than or equal to the clock supported by the first communication node, to sum up,, the target cell can complete the TSC transmission required by the first communication node, and it is no longer necessary to re-select a cell during TSC transmission, then it is determined that the target cell is a suitable cell to camp on.

In a specific implementation, at least the above methods can be used to determine whether the currently selected cell can meet the transmission requirement of the UE.

S202: determining to camp on the target cell if the target cell meets the service transmission requirement.

According to the solution in the above steps, it is determined that the currently selected target cell can meet the service transmission requirements of the first communication node (that is, the UE), then it is determined that the cell is a suitable cell, or a cell that can be camped on, and the cell is camped on.

S203: continuing to perform the cell selection or reselection if the target cell does not meet the service transmission requirement.

In this step, if it is determined that the currently selected target cell does not meet the service transmission requirements according to the above solution, the first communication node (that is, the UE) can continue to perform cell selection or reselection. The specific selection method are similar to the above, the selection is still made according to the specific situation of the next cell indicated by the reference clock information of the cell, until a suitable cell that can meet the service requirements of the UE is selected.

In the cell selection method provided in this embodiment, whether the selected cell can meet the service transmission requirements may be determined according to the content specifically indicated in the reference clock information of the cell, the transmission supported or the clock required by the first communication node, or the transmission capability possessed by the first communication node, and so on, so that the first communication node selects a suitable cell to camp on, and time delay caused by the cell handover again is avoided.

On the basis of the above two embodiments, in the specific implementation of the solution, the cell reference clock information of the cell may further include any one of the following:
reference single frequency network (Single Frequency Network, SFN) of a neighboring cell, time of the corresponding reference SFN of the neighboring cell, the SFN difference, the accuracy difference, and the time difference.

Specifically, reference clock information used to indicate neighboring cells or neighboring frequency points, for example: ReferenceTimeInfo corresponding to a neighboring cell or a neighboring frequency point, is used to acquire neighboring cell clock information;
information used to indicate whether the neighboring cell or the neighboring frequency point supports a corresponding clock of the TSC, for example, it can be the TSC clock domain or index of the neighboring cell or the neighboring frequency point, is used to determine the TSC clock information corresponding to the neighboring cell;
information used to indicate the reference system frame number SFN of the neighboring cell or neighboring frequency point, which can be directly the reference system frame number reference SFN of the neighboring cell or neighboring frequency point, is used to indicate the SFN number corresponding to the time information of the corresponding indication;
time information time of the neighboring cell or neighboring frequency point, the time information corresponds to the referenceSFN, and is used to determine the time information corresponding to the time point indicated by the reference SFN of the neighboring frequency or neighboring cell (for example, which day, which second, which millisecond, which 10ns), that is, is used to determine specific time information.

The difference between the reference system frame number reference SFN of the neighboring cell or frequency point and the current cell/frequency point is used to determine the reference SFN of the neighboring cell based on the reference SFN of the current cell.

The time difference refers to the difference of time information time between the neighboring cell or neighboring frequency point and the current cell/frequency point, which is used to determine the time of the neighboring cell based on the time of the current cell;
the accuracy difference refers to the accuracy difference between the neighboring cell or neighboring frequency point and the current cell/frequency point, which is used to determine the accuracy, or whether the accuracy of the neighboring cell is appropriate.

On the basis of any of the above embodiments, the method for selecting a cell provided by the present application will be described in detail below by taking the first communication node as a UE and the second communication node as a gNB as an example.

In the following embodiments, specific reference clock information, given reference clock information, and specific clock information all represent the same meaning and can be replaced with each other.

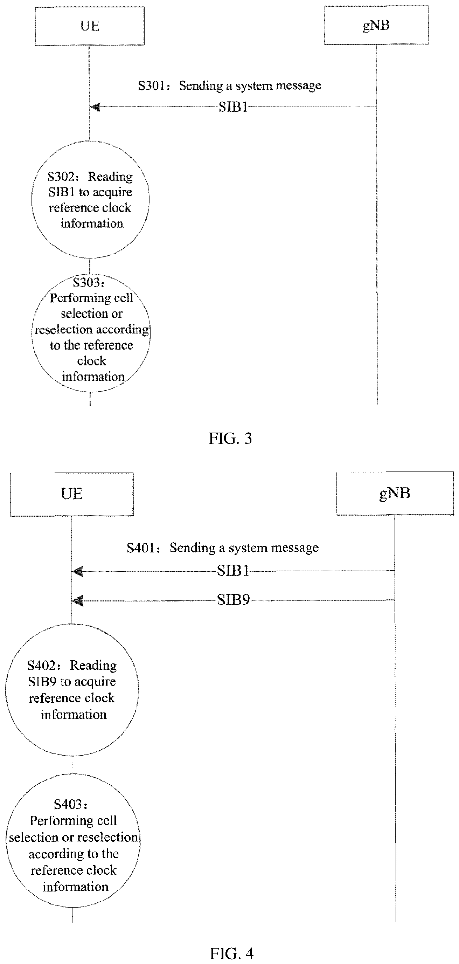

FIG. 3 is a schematic flowchart of an example of a cell selection method provided by the present application. As shown in FIG. 3, the cell selection method includes the following steps:
S301: sending a system message.

In this solution, the base station gNB specifies specific reference clock information in SIB1, that is, the base station carries specifies specific reference clock information in SIB1. Specifically, it indicates whether TSN clock is supported, whether high-precision clock is supported, and the granularity of supported clock precision (10ms or 10ns). Or it can indicate that the specific reference clock information can be a clock corresponding to a TSN or TCS, or clock information of a high-precision clock (e.g., precision of 10ns).

In a specific implementation, the gNB indicates in SIB 1 whether the cell or frequency point supports a TSN clock, or whether the cell or frequency point supports a high-precision clock, or indicates the granularity of clock precision supported by the cell or frequency point (10ms or 10ns), or, indicating whether the cell or frequency point broadcasts/configures ReferenceTimelnfo-r16.

This step may be sent when the UE performs cell selection or reselection, or may be sent in advance, which is not limited in this solution.

S302: reading SIB1 to acquire reference clock information.

In this step, when performing cell selection or reselection, the UE needs to read the SIB1 information of the selected cell, to acquire the specific reference clock information indicated by the reference clock information of the cell in the SIB 1.

In the specific implementation of this solution, for a UE that supports TSC service, or a UE that supports TSN transmission, or a UE that has TSN transmission capability, or a UE that is performing or is about to perform TSC transmission, it is necessary to read the SIB 1 information of the selected cell to acquire the specific reference clock information indicated by the SIB 1 information when performing cell selection or reselection.

S303: performing cell selection or reselection according to the reference clock information.

In this step, after the UE acquires the indicated specific reference clock information according to SIB1, the UE determines whether the cell is a suitable cell or a cell that can be camped on, or determines whether to continue the cell selection or reselection process.

In the specific implementation, if the UE is a UE that supports a TSC service, or a UE that supports TSN transmission, or a UE that has a TSN transmission capability, or a UE that is performing or is about to perform TSC transmission, and when the reference clock information of the cell acquired by the UE through SIB 1 indicates specific reference clock information, the UE continues to perform the process of cell selection or reselection if it is determined that the currently selected cell is not a cell or frequency point that supports the specific reference clock information, or it is determined that the cell is not a suitable cell, or it is determined that the cell is not a cell that can be camped on. Otherwise, the UE can camp on the cell if it is determined that the currently selected cell is a cell or frequency point that supports the specific reference clock information, or it is determined that the cell is a suitable cell, or it is determined that the cell is a cell that can be camped on.

In an implementation manner, if the UE is a UE that supports a TSC service, or a UE that supports TSN transmission, or a UE that has a TSN transmission capability, or a UE that is performing or is about to perform TSC transmission, and it is determined that the currently selected cell is not a cell that supports the specific reference clock information after the UE acquires the specific reference clock information through SIB1, then the UE performs the process of cell selection or reselection, and continues to search for other cells at the frequency point to determine if there is a cell that supports the specific reference clock information, otherwise, the UE considers the cell to be a suitable cell and/or camps on the cell.

It should be noted that, the specific reference clock information indicated by SIB 1 may also be carried in the MIB. Correspondingly, the UE acquires the specific reference clock information by reading the information in the MIB, and/or determines whether the cell is a suitable cell, and so on, and subsequent manner of determining whether to camp on the cell is similar to the above.

In this solution, it should be understood that the specific reference clock information is clock information supporting the TSN service or the TSC in the foregoing embodiment.

FIG. 4 is a schematic flowchart of another example of a cell selection method provided by the present application. As shown in FIG. 4, the cell selection method includes the following steps:
S401: sending a system message.

In this step, the base station also sends a system message, but since the system includes different SIBs, in this solution, specific reference clock information is indicated in SIB9. Specifically, the specific reference clock information may be a clock corresponding to a TSN or TCS, or clock information of a high-precision clock (e.g., precision of 10ns).

For example, whether the cell or use the TSN clock, or the granularity of the supported clock precision (10ms or 10ns) is indicated in SIB9, or, ReferenceTimelnfo-r16 may or may not be included.

This step may be sent when the UE performs cell selection or reselection, or may be sent in advance, which is not limited in this solution.

S402: reading SIB9 to acquire reference clock information.

In this step, when the UE performs cell selection or reselection, it needs to read the SIB9 information of the selected cell to acquire the specific reference clock information indicated by it.

Specifically, a UE that supports TSC service, or a UE that supports TSN transmission, or a UE that has TSN transmission capability, or a UE that is performing or is about to perform TSC transmission, needs to read the SIB9 information of the selected cell to acquire the specific reference clock information when performing cell selection or reselection.

S403: performing cell selection or reselection according to the reference clock information.

In this step, after the UE acquires the specific reference clock information according to the SIB9, the UE determines whether the cell is a suitable cell, or determines whether to continue to perform the process of cell selection or reselection.

Specifically, if the UE is a UE that supports a TSC service, or a UE that supports TSN transmission, or a UE that has a TSN transmission capability, or a UE that is performing or is about to perform TSC transmission, and the UE determines that the currently selected cell is not a cell that supports the specific reference clock information, or does not broadcast ReferenceTimelnfo-r16 after acquiring the specific reference clock information through SIB9, the UE continues to perform the process of cell selection or reselection, or determines that the cell is not a suitable cell, or determines that the cell is not available for camping on, otherwise, the UE considers the cell to be a suitable cell and/or camps on the cell.

Specifically, if the UE is a UE that supports a TSC service, or a UE that supports TSN transmission, or a UE that has a TSN transmission capability, or a UE that is performing or is about to perform TSC transmission, and the UE determines that the currently selected cell is not a cell that supports the specific reference clock information after acquiring the specific reference clock information through SIB9, then the UE performs the process of cell selection or reselection, and continues to search whether there is a cell that supports the specific reference clock information in other cells of the frequency point, until a suitable cell is found. Otherwise, the UE considers the cell to be a suitable cell and/or camps on the cell.

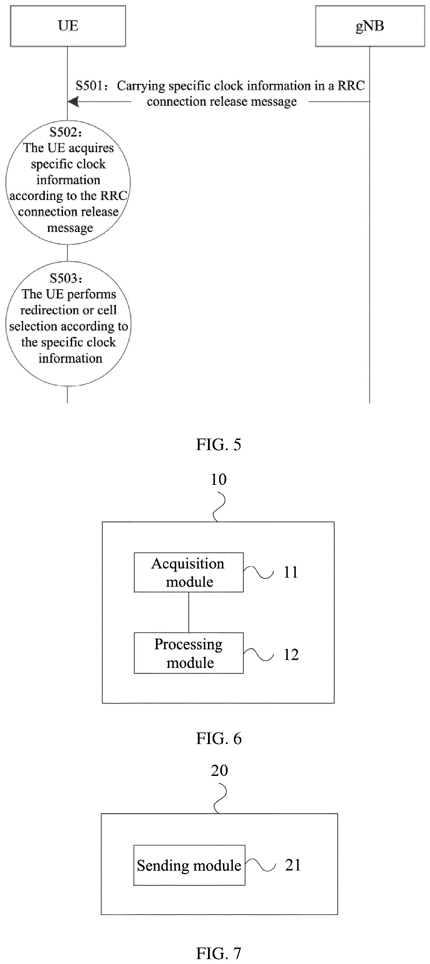

FIG. 5 is a schematic flowchart of yet another example of a cell selection method provided by the present application. As shown in FIG. 5, the cell selection method includes the following steps:
S501: carrying specific clock information in a RRC connection release message.

S502: the UE acquires specific clock information according to the RRC connection release message.

In this solution, the base station indicates in FreqPriorityNR and/or CarrierInfoNR in the RRC connection release message (release) whether the included frequency point or cell supports/includes the specific reference clock information, such as indicating whether the TSN clock is supported and whether a high-precision clock is supported, granularity of the supported clock precision (10ms or 10ns). Of course, the information can also be acquired through other messages in the RRC connection release message (release).

For example, indicating the granularity (10ms or 10ns) of the frequency point or cell or supported clock precision in the FreqPriorityNR of the RRC release, or whether ReferenceTimelnfo-r16 is included.

The UE can directly parse the received RRC connection release message to obtain the indicated specific clock information.

Of course, the reference clock information of the neighboring cell, such as ReferenceTimeInfo, time, and referenceSFN, can also be acquired through the release message.

S503: the UE performs redirection or cell selection according to the specific clock information.

In this step, when the UE performs redirection according to the RRC release, it adjusts the frequency point priority of redirection according to the acquired specific reference clock information, and performs redirection processing according to the adjusted frequency point priority. Or, when the UE gives the reselection priority according to the RRC release, it adjusts the frequency point priority of cell reselection according to the acquired specific reference clock information, and performs the processing of cell reselection according to the adjusted frequency point priority.

In a specific implementation of this solution, the UE may also determine the priority of the cell or frequency point according to the specific clock information, and then determine the target cell according to the new cell priority and/or the frequency point priority, which is not limited in this solution.

Or, when the UE performs redirection according to the RRC release, it adjusts the priority of the redirected cell according to the acquired specific reference clock information, and performs cell selection or reselection according to the adjusted cell priority.

That is, the UE may re-determine the cell priority and/or the frequency point priority according to the reference clock information of the cell indicated by the base station, and then determine whether to camp on the selected cell according to the new cell priority and/or the frequency point priority, or determine a next target cell to be selected during cell selection or reselection according to the new cell priority and/or frequency point priority.

Specifically, for a UE that supports a TSC service, or a UE that supports TSN transmission, or a UE that has a TSN transmission capability, or a UE that is performing or is about to perform TSC transmission, at this point, the cells or frequency points that support the TSN, or cells or frequency points that support precision of 10ns precision, are set as high priority. That is, the priority information of the configuration is adjusted according to information of the supported clock, and cells or frequency points with high accuracy are preferentially supported.

Optionally, in this solution, it should also be understood that the frequency priority or cell priority can be determined by indicating specific clock information regardless of the aforementioned system message or the RRC connection release message, or it can directly indicate the frequency priority or cell priority, which is not limited in this solution.

In addition, the UE may also retain the acquired reference clock information of a neighboring cell or neighboring frequency, including ReferenceTimeInfo, time, referenceSFN, and accuracy, and so on.

In the cell selection method provided by the present application, during cell selection and reselection, for UEs that support the time sensitive network or the time sensitive transmission, the specific reference clock information indicated in the RRC release, or SIB9, or SIB 1 information will be acquired, and then it is determined whether the current cell is a suitable cell or whether to proceed with the cell selection or reselection procedure.

In addition, the SIB1, SIB9, MIB or RRC connection release messages are only used as examples in the examples of this application, and the reference clock information of the cell can be sent through these messages, or specific reference clock information can be indicated. In the practical application of this solution, the network device may also instructs the UE through other downlink messages, which is not limited in this solution.

FIG. 6 is a schematic structural diagram of a first embodiment of the cell selection apparatus provided by the present application. As shown in FIG. 6, the cell selection apparatus 10 includes:
an acquisition module 11, configured to acquire reference clock information of a cell in the process of cell selection or reselection;
a processing module 12, configured to determine whether to camp on a selected target cell according to the reference clock information of the cell.

The cell selection apparatus provided in this embodiment is used to implement the technical solution of the first communication node, such as UE, in any of the foregoing method embodiments. The implementation principles and technical effects therebetween are similar, the reference clock information of the cell in the process of cell selection or reselection is acquired, and then whether to camp on the selected target cell according to the reference clock information of the cell is determined, thereby avoiding that cell reselection needs to be performed due to being camped on a cell which does not match its own capability, and resulting in a delay problem. And a cell that matches its own capability can be selected to be camped on according to the reference clock information of the cell.

On the basis of the above-mentioned embodiment, specifically,
the reference clock information of the cell includes at least one of the following:
information about a clock supported by a current cell or frequency point;
information indicating whether a current cell or frequency point supports a clock corresponding to a time sensitive network TSN;
information indicating whether a current cell or frequency point supports a clock corresponding to time sensitive transmission TSC;
reference clock information of a neighboring cell or a neighboring frequency point;
information indicating a reference system frame number SFN of a neighboring cell or a neighboring frequency point;
information indicating whether a neighboring cell or a neighboring frequency point supports a clock corresponding to TSC;
time information of a neighboring cell or a neighboring frequency point;
a SFN difference between a neighboring cell and a current cell, or a SFN difference between a neighboring frequency point and a current frequency point;
a time information difference between a neighboring cell and a current cell, or a time information difference between a neighboring frequency point and a current frequency point;
an accuracy difference between a neighboring cell and a current cell, or an accuracy difference between a neighboring frequency point and a current frequency point.

On the basis of the above embodiment, optionally, the acquisition module 11 is specifically configured to:
acquire the reference clock information of the cell from local storage space.

Optionally, the acquisition module 11 is specifically configured to:
acquire the reference clock information of the cell from received information sent by a second communication node.

The cell selection apparatus includes a user equipment UE, the second communication node includes a network equipment, and the acquiring module is specifically configured to:
acquire the reference clock information of the cell from system information; or
acquire the reference clock information of the cell from a radio resource control (RRC) connection release message.

Optionally, the acquisition module 11 is specifically configured to:
read the reference clock information of the cell from a system information block SIB1; or,
read the reference clock information of the cell from a system information block SIB9; or,
read the reference clock information of the cell from a master information block MIB.

On the basis of any of the above solutions, the cell selection apparatus 10 supports a delay sensitive service, and the processing module 12 is specifically configured to:
determine whether the target cell meets the service transmission requirement according to the reference clock information of the cell;
determine to camp on the target cell if the target cell meets the service transmission requirement;
otherwise, proceed with cell selection or reselection.

Optionally, the cell selection apparatus 10 supports TSN transmission or has a TSN transmission capability, and the processing module 12 is specifically configured to:
the reference clock information of the cell indicates that the target cell supports a clock corresponding to a TSN, or the reference clock information of the cell indicates that the target cell matches the TSN transmission requirement supported by the cell selection apparatus, or the reference clock information of the cell indicates that the target cell satisfies the TSN transmission, then it is determined that the target cell satisfies the service transmission requirement.

Optionally, the cell selection apparatus 10 supports a TSC service or needs to perform TSC transmission, and the processing module 12 is specifically configured to:
the reference clock information of the cell indicates that the target cell supports a clock corresponding to TSC, or the reference clock information of the cell indicates that the target cell matches the TSC transmission requirement supported by the cell selection apparatus, or the reference clock information of the cell indicates that the target cell satisfies the TSC service, or the reference clock information of the cell indicates that the clock of the target cell is the same as the clock supported by the cell selection apparatus, or the reference clock information of the cell indicates that the clock of the target cell is higher than the clock supported by the cell selection apparatus, it is determined that the target cell meets the service transmission requirement.

Optionally, the processing module 12 is further configured to:
determine cell priority and/or frequency point priority according to the reference clock information of the cell.

Optionally, the processing module 12 is further configured to:
determine the target cell according to the cell priority and/or the frequency point priority; or,
determine whether to camp on the target target according to the cell priority and/or the frequency point priority.

The cell selection apparatus provided in any of the foregoing embodiments is configured to execute the technical solution of the first communication node, such as the UE side, in any of the foregoing method embodiments, and the implementation principles and technical effects therebetween are similar, and will not be repeated here.

FIG. 7 is a schematic structural diagram of a second embodiment of a cell selection apparatus provided by the present application. As shown in FIG. 7, the cell selection apparatus 20 includes:
a sending module 21, configured to send reference clock information of a cell to a first communication node, where the reference clock information of the cell is used for the first communication node to perform cell selection or reselection.

Optionally, the reference clock information of the cell includes at least one of the following:
information about a clock supported by a current cell or frequency point;
information indicating whether a current cell or frequency point supports a clock corresponding to a time sensitive network TSN;
information indicating whether a current cell or frequency point supports a clock corresponding to time sensitive transmission TSC;
reference clock information of a neighboring cell or a neighboring frequency point;
information indicating a reference system frame number SFN of a neighboring cell or a neighboring frequency point;
information indicating whether a neighboring cell or a neighboring frequency point supports a clock corresponding to TSC;
time information of a neighboring cell or a neighboring frequency point;
a SFN difference between a neighboring cell and a current cell, or a SFN difference between a neighboring frequency point and a current frequency point;
a time information difference between a neighboring cell and a current cell, or a time information difference between a neighboring frequency point and a current frequency point;
an accuracy difference between a neighboring cell and a current cell, or an accuracy difference between a neighboring frequency point and a current frequency point.

Optionally, the cell selection apparatus 20 includes a network device, and the sending module 21 is specifically configured to:
broadcast system information, where the system information includes the reference clock information of the cell.

Optionally, the reference clock information of the cell is carried in a system information block SIB1, or is carried in a SIB9, or is carried in a master information block MIB.

Optionally, the cell selection apparatus 20 includes the network device, and the sending module 21 is specifically configured to:
send a radio resource control RRC connection release message, where the RRC connection release message includes the reference clock information of the cell.

The cell selection apparatus provided in any of the foregoing embodiments is used to execute the technical solutions on the second communication node, such as the network device side, in any of the foregoing method embodiments, and the implementation principles and technical effects therebetween are similar, and will not be repeated here.

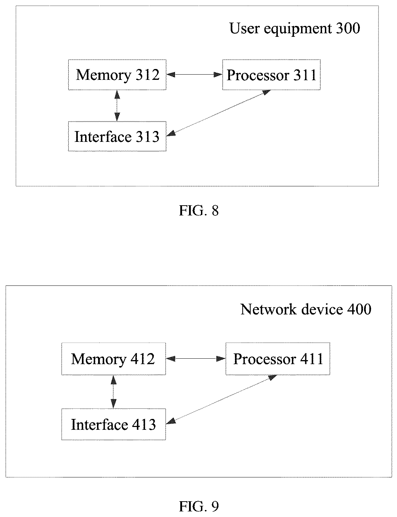

FIG. 8 is a schematic structural diagram of a first embodiment of a communication device provided by the present application. As shown in FIG. 8, the communication device 300 includes:
a processor 311, a memory 312, an interface 313 for communicating with other communication devices;
the memory 312 stores a computer executable instruction;
the processor 311 executes the computer executable instruction stored in the memory, enabling the processor to perform the technical solutions on the first communication node side in any of the foregoing method embodiments.

FIG. 8 is a simple design of a communication device, which may be, for example, a UE. The embodiments of the present application do not limit the number of processors and memories. FIG. 8 only uses the number of 1 as an example for illustration.

FIG. 9 is a schematic structural diagram of a second embodiment of a communication device provided by the present application. As shown in FIG. 9, the communication device 400 includes:
a processor 411, a memory 412, an interface 413 for communicating with other communication devices;
the memory 412 stores a computer executable instructions;
the processor 411 executes the computer executable instruction stored in the memory, enabling the processor to perform the technical solutions on the second communication node side in any of the foregoing method embodiments.

FIG. 9 is a simple design of a communication device, for example, a network device. The embodiments of the present application do not limit the number of processors and memories in the communication device. FIG. 11 only uses the number of 1 as an example for illustration.

In a specific implementation of the communication device described in FIG. 10 and FIG. 11, the memory, the processor and the interface may be connected through a bus, and optionally, the memory may be integrated inside the processor.

Optionally, the above-mentioned processor may be a chip.

The present application further provides a computer readable storage medium, where the computer readable storage medium stores a computer executable instructions, and when the computer executable instruction is executed by a processor, the technical solution on first communication note side in any of the foregoing method embodiments is implemented.

The present application further provides a computer readable storage medium, where the computer readable storage medium stores a computer executable instruction, and when the computer executable instruction is executed by a processor, the technical solution on second communication node in any of the foregoing method embodiments is implemented.

Embodiments of the present application further provide a program, which, when executed by the processor, is used to execute the technical solution on the first communication node side in any of the foregoing method embodiments.

Embodiments of the present application further provide a program, which, when executed by the processor, is used to execute the technical solution on the second communication node side in any of the foregoing method embodiments.

Embodiments of the present application further provide a computer program product, including program instructions, where the program instructions are used to implement the technical solution of the first communication node in any of the foregoing method embodiments.

Embodiments of the present application further provide a computer program product, including program instructions, where the program instructions are used to implement the technical solution of the second communication node in any of the foregoing method embodiments.

Embodiments of the present application further provides a chip, including a processing module and a communication interface, where the processing module can execute the technical solution on the first communication node side in any of the foregoing method embodiments.

Further, the chip also includes a storage module (e.g., a memory), the storage module is configured to store instructions, the processing module is configured to execute the instructions stored in the storage module, and the execution of the instructions stored in the storage module enables the processing module to execute the technical solution on the first communication node side in any of the foregoing method embodiment.

Embodiments of the present application further provides a chip, including a processing module and a communication interface, where the processing module can execute the technical solutions on the second communication node side in any of the foregoing method embodiments.

Further, the chip also includes a storage module (e.g., a memory), the storage module is configured to store instructions, the processing module is configured to execute the instructions stored in the storage module, and the execution of the instructions stored in the storage module enables the processing module to execute the technical solution on the second communication node side in any of the foregoing method embodiment.

In the several embodiments provided in the present application, it should be understood that the disclosed device and method may be implemented in other manners. For example, the device embodiments described above are only illustrative. For example, the division of the modules is only a logical function division. In actual implementation, there may be other division methods. For example, multiple modules may be combined or integrated to another system, or some features can be ignored, or not implemented. On the other hand, the mutual coupling or direct coupling or communication connection shown or discussed may be through some interfaces, and the indirect coupling or communication connection of modules may be in electrical, mechanical or other forms.

In the specific implementation of the above communication device, it should be understood that the processor may be a central processing unit (English: Central Processing Unit, abbreviation: CPU), or other general purpose processors, digital signal processors (English: Digital Signal Processor, Abbreviation: DSP), application specific integrated circuit (English: Application Specific Integrated Circuit, Abbreviation: ASIC), and so on. A general purpose processor may be a microprocessor or the processor may be any conventional processor or the like. The steps in combination with the method disclosed in the present application can be directly embodied as executed by a hardware processor, or executed by a combination of hardware and software modules in the processor.

All or part of the steps for implementing the above method embodiments may be completed by hardware related to program instructions. The aforementioned program can be stored in a readable memory. When the program is executed, the steps including the above method embodiments are executed; and the aforementioned memory (storage medium) includes: read-only memory (English: read-only memory, abbreviation: ROM), RAM, flash memory, hard disk, solid state drive, magnetic tape (English: magnetic tape), floppy disk (English: floppy disk), optical disc (English: optical disc) and any combination thereof.

## Claims

1. A cell selection method, applied to a first communication node, the method comprises:
acquiring reference clock information of a cell in a process of cell selection or reselection;
determining whether to camp on a selected target cell according to the reference clock information of the cell.

2. The method according to claim 1, wherein the reference clock information of the cell comprises at least one of the following:
information about a clock supported by a current cell or frequency point;
information indicating whether a current cell or frequency point supports a clock corresponding to a time sensitive network TSN;
information indicating whether a current cell or frequency point supports a clock corresponding to time sensitive transmission TSC;
reference clock information of a neighboring cell or a neighboring frequency point;
information indicating a reference system frame number SFN of a neighboring cell or a neighboring frequency point;
information indicating whether a neighboring cell or a neighboring frequency point supports a clock corresponding to TSC;
time information of a neighboring cell or a neighboring frequency point;
a SFN difference between a neighboring cell and a current cell, or a SFN difference between a neighboring frequency point and a current frequency point;
a time information difference between a neighboring cell and a current cell, or a time information difference between a neighboring frequency point and a current frequency point;
an accuracy difference between a neighboring cell and a current cell, or an accuracy difference between a neighboring frequency point and a current frequency point.

3. The method according to claim 1 or 2, wherein the acquiring the reference clock information of the cell comprises:
acquiring the reference clock information of the cell from local storage space.

4. The method according to claim 1 or 2, wherein the acquiring the reference clock information of the cell comprises:
acquiring the reference clock information of the cell from received information sent by a second communication node.

5. The method according to claim 4, wherein the first communication node comprises a user equipment UE, the second communication node comprises a network device, and the acquiring the reference clock information of the cell from the received information sent by the second communication node comprises:
acquiring the reference clock information of the cell from system information; or
acquiring the reference clock information of the cell from radio resource control RRC connection release message.

6. The method according to claim 5, wherein the acquiring the reference clock information of the cell from the system information comprises:
reading the reference clock information of the cell from a system information block SIB1; or,
reading the reference clock information of the cell from a system information block SIB9; or
reading the reference clock information of the cell from a master information block MIB.

7. The method according to any one of claims 1 to 6, wherein the first communication node supports a delay sensitive service, and the determining whether to camp on the selected target cell according to the reference clock information of the cell comprises:
determining whether the target cell meets service transmission requirement according to the reference clock information of the cell;
determining to camp on the target cell if the target cell meets the service transmission requirement;
otherwise, continuing to perform the cell selection or reselection.

8. The method according to claim 7, wherein the first communication node supports TSN transmission or has a TSN transmission capability, and the determining whether the target cell meets the service transmission requirement according to the reference clock information of the cell comprises:
the reference clock information of the cell indicates that the target cell supports a clock corresponding to a TSN, or the reference clock information of the cell indicates that the target cell matches the TSN transmission requirement supported by the first communication node, or the reference clock information of the cell indicates that the target cell satisfies the TSN transmission, it is determined that the target cell satisfies the service transmission requirement.

9. The method according to claim 7, wherein the first communication node supports a TSC service or needs to perform TSC transmission, and the determining whether the target cell meets the service transmission requirement according to the reference clock information of the cell comprises:
the reference clock information of the cell indicates that the target cell supports a clock corresponding to TSC, or the reference clock information of the cell indicates that the target cell matches the TSC transmission requirement supported by the first communication node, or the reference clock information of the cell indicates that the target cell satisfies the TSC service, or the reference clock information of the cell indicates that a clock of the target cell is the same as a clock supported by the first communication node, or a clock of the target cell indicated by the reference clock information of the cell is higher than a clock supported by the first communication node, it is determined that the target cell meets the service transmission requirement.

10. The method according to any one of claims 1 to 6, wherein the method further comprises:
determining cell priority and/or frequency point priority according to the reference clock information of the cell.

11. The method according to claim 10, wherein the method further comprises:
determining the target cell according to the cell priority and/or the frequency point priority; or,
determining whether to camp on the target target according to the cell priority and/or the frequency point priority.

12. A cell selection method, applied to a second communication node, the method comprises:
sending reference clock information of a cell to a first communication node, wherein the reference clock information of the cell is used for the first communication node to perform cell selection or reselection.

13. The method according to claim 12, wherein the reference clock information of the cell comprises at least one of the following:
information about a clock supported by a current cell or frequency point;
information indicating whether a current cell or frequency point supports a clock corresponding to a time sensitive network TSN;
information indicating whether a current cell or frequency point supports a clock corresponding to time sensitive transmission TSC;
reference clock information of a neighboring cell or a neighboring frequency point;
information indicating a reference system frame number SFN of a neighboring cell or a neighboring frequency point;
information indicating whether a neighboring cell or a neighboring frequency point supports a clock corresponding to TSC;
time information of a neighboring cell or a neighboring frequency point;
a SFN difference between a neighboring cell and a current cell, or a SFN difference between a neighboring frequency point and a current frequency point;
a time information difference between a neighboring cell and a current cell, or a time information difference between a neighboring frequency point and a current frequency point;
an accuracy difference between a neighboring cell and a current cell, or an accuracy difference between a neighboring frequency point and a current frequency point.

14. The method according to claim 12 or 13, wherein the second communication node comprises a network device, and the sending the reference clock information of the cell to the first communication node comprises:
broadcasting system information, wherein the system information comprises the reference clock information of the cell.

15. The method according to claim 14, wherein the reference clock information of the cell is carried in a system information block SIB1, or is carried in a SIB9, or is carried in a master information block MIB.

16. The method according to claim 12 or 13, wherein the second communication node comprises a network device, and the sending the reference clock information of the cell to the first communication node comprises:
sending a radio resource control RRC connection release message, wherein the RRC connection release message comprises the reference clock information of the cell.

17. A cell selection apparatus, comprising:
an acquisition module, configured to acquire reference clock information of a cell in a process of cell selection or reselection;
a processing module, configured to determine whether to camp on a selected target cell according to the reference clock information of the cell.

18. The apparatus according to claim 17, wherein the reference clock information of the cell comprises at least one of the following:
information about a clock supported by a current cell or frequency point;
information indicating whether a current cell or frequency point supports a clock corresponding to a time sensitive network TSN;
information indicating whether a current cell or frequency point supports a clock corresponding to time sensitive transmission TSC;
reference clock information of a neighboring cell or a neighboring frequency point;
information indicating a reference system frame number SFN of a neighboring cell or a neighboring frequency point;
information indicating whether a neighboring cell or a neighboring frequency point supports a clock corresponding to TSC;
time information of a neighboring cell or a neighboring frequency point;
a SFN difference between a neighboring cell and a current cell, or a SFN difference between a neighboring frequency point and a current frequency point;
a time information difference between a neighboring cell and a current cell, or a time information difference between a neighboring frequency point and a current frequency point;
an accuracy difference between a neighboring cell and a current cell, or an accuracy difference between a neighboring frequency point and a current frequency point.

19. The apparatus according to claim 17 or 18, wherein the acquisition module is specifically configured to:
acquire the reference clock information of the cell from local storage space.

20. The apparatus according to claim 17 or 18, wherein the acquisition module is specifically configured to:
acquire the reference clock information of the cell from received information sent by the second communication node.

21. The apparatus according to claim 20, wherein the cell selection apparatus comprises a user equipment UE, the second communication node comprises a network device, and the acquisition module is specifically configured to:
acquire the reference clock information of the cell from system information; or
acquire the reference clock information of the cell from a radio resource control RRC connection release message.

22. The apparatus according to claim 21, wherein the acquisition module is specifically configured to:
read the reference clock information of the cell from a system information block SIB1; or
read the reference clock information of the cell from a system information block SIB9; or
read the reference clock information of the cell from a master information block MIB.

23. The apparatus according to any one of claims 17 to 22, wherein the cell selection apparatus supports a delay sensitive service, and the processing module is specifically configured to:
determine whether the target cell meets service transmission requirement according to the reference clock information of the cell;
determine to camp on the target cell if the target cell meets the service transmission requirement;
otherwise, proceed with cell selection or reselection.

24. The apparatus according to claim 23, wherein the cell selection apparatus supports TSN transmission or has a TSN transmission capability, and the processing module is specifically configured to:
the reference clock information of the cell indicates that the target cell supports a clock corresponding to a TSN, or the reference clock information of the cell indicates that the target cell matches TSN transmission requirement supported by the cell selection apparatus, or the reference clock information of the cell indicates that the target cell satisfies the TSN transmission, it is determined that the target cell satisfies the service transmission requirement.

25. The apparatus according to claim 23, wherein the cell selection apparatus supports a TSC service or needs to perform TSC transmission, and the processing module is specifically configured to:
the reference clock information of the cell indicates that the target cell supports a clock corresponding to TSC, or the reference clock information of the cell indicates that the target cell matches TSC transmission requirement supported by the cell selection apparatus, or the reference clock information of the cell indicates that the target cell satisfies the TSC service, or the reference clock information of the cell indicates that a clock of the target cell is the same as a clock supported by the cell selection apparatus, or a clock of the target cell indicated by the reference clock information of the cell is higher than a clock supported by the cell selection apparatus, it is determined that the target cell meets the service transmission requirement.

26. The apparatus according to any one of claims 17 to 22, wherein the processing module is further configured to:
determine cell priority and/or frequency point priority according to the reference clock information of the cell.

27. The apparatus according to claim 26, wherein the processing module is further configured to:
determine the target cell according to the cell priority and/or the frequency point priority; or,
determine whether to camp on the target target according to the cell priority and/or the frequency point priority.

28. A cell selection apparatus, comprising:
a sending module, configured to send reference clock information of a cell to a first communication node, wherein the reference clock information of the cell is used for the first communication node to perform cell selection or reselection.

29. The apparatus according to claim 28, wherein the reference clock information of the cell comprises at least one of the following:
information about a clock supported by a current cell or frequency point;
information indicating whether a current cell or frequency point supports a clock corresponding to a time sensitive network TSN;
information indicating whether a current cell or frequency point supports a clock corresponding to time sensitive transmission TSC;
reference clock information of a neighboring cell or a neighboring frequency point;
information indicating a reference system frame number SFN of a neighboring cell or a neighboring frequency point;
information indicating whether a neighboring cell or a neighboring frequency point supports a clock corresponding to TSC;
time information of a neighboring cell or a neighboring frequency point;
a SFN difference between a neighboring cell and a current cell, or a SFN difference between a neighboring frequency point and a current frequency point;
a time information difference between a neighboring cell and a current cell, or a time information difference between a neighboring frequency point and a current frequency point;
an accuracy difference between a neighboring cell and a current cell, or an accuracy difference between a neighboring frequency point and a current frequency point.

30. The apparatus according to claim 28 or 29, wherein the cell selection apparatus comprises a network device, and the sending module is specifically configured to:
broadcast system information, wherein the system information comprises the reference clock information of the cell.

31. The apparatus according to claim 30, wherein the reference clock information of the cell is carried in a system information block SIB1, or is carried in a SIB9, or is carried in a master information block MIB.

32. The apparatus according to claim 28 or 29, wherein the cell selection apparatus comprises a network device, and the sending module is specifically configured to:
send a radio resource control RRC connection release message, wherein the RRC connection release message comprises the reference clock information of the cell.

33. A communication device, comprising:
a processor, a memory, an interface for communicating with other communication devices; the memory stores a computer executable instruction;
the processor executes the computer executable instruction stored in the memory, and enabling the processor to perform the cell selection method according to any one of claims 1 to 11.

34. A communication device, comprising:
a processor, a memory, an interface for communicating with other communication devices;
the memory stores a computer executable instructions;
the processor executes the computer executable instruction stored in the memory, and enabling the processor to perform the cell selection method according to any one of claims 12 to 16.

35. A computer readable storage medium, wherein computer readable storage medium stores a computer executable instruction, and when the computer executable instruction is executed by a processor, the cell selection method according to any one of claims 1 to 11 is implemented.

36. A computer readable storage medium, wherein the computer readable storage medium stores a computer executable instruction, and when the computer executable instruction is executed by a processor, the cell selection method according to any one of claims 12 to 16 is implemented.
